# FASCICULE DE BREVET EUROPEEN

(11) **EP 3 328 680 B1**
(45) Date de publication et mention de la délivrance du brevet: **26.05.2021**
(21) Numéro de dépôt: 16736113.8
(22) Date de dépôt: 06.07.2016
(51) Int. Cl.: H01M 10/625, H01M 10/658, B60K 1/04, F28F 9/013, F28D 1/06, B60K 1/00

(54) **SUPPORT DE TUBE DE CONDITIONNEMENT THERMIQUE D'UNE BATTERIE DE VEHICULE AUTOMOBILE, COMPORTANT UN SOCLE MUNI D'UN RESSORT**
HALTER FÜR EIN THERMISCHES KONDITIONIERUNGSROHR EINER KRAFTFAHRZEUGBATTERIE MIT EINER BASIS MIT FEDER
HOLDER FOR THERMAL CONDITIONING TUBE OF A MOTOR VEHICLE BATTERY, COMPRISING A BASE PROVIDED WITH A SPRING

(30) Priorité: 29.07.2015 FR 1557235
(43) Date de publication de la demande: 06.06.2018
(73) Titulaire: Valeo Systèmes Thermiques, 78320 Le Mesnil-Saint-Denis (FR)
(72) Inventeur: ROBILLON, Lionel, 72230 Mulsanne (FR); DENOUAL, Christophe, 72430 Noyen sur Sarthe (FR); POURMARIN, Alain, 72210 La Suze-sur-sarthe (FR); BARRE, Boris, 72700 Pruille le Chetif (FR); IBRAHIMI, Mohamed, 72700 Allones (FR); LEGOT, Laurent, 75020 Paris (FR)
(74) Mandataire: Tran, Chi-Hai
(86) Numéro de dépôt international: PCT/EP2016/065928
(87) Numéro de publication internationale: WO 2017/016830

(56) Documents cités:
- EP-A1- 2 388 851
- EP-A1- 2 945 218
- WO-A1-2013/171205
- WO-A1-2015/071068

## Description

La présente invention relève du domaine des appareils de régulation thermique d'une batterie équipant un véhicule automobile dont la propulsion est fournie en tout ou partie par une motorisation électrique. Plus spécifiquement, la présente invention relève des dispositifs de montage des tubes d'un échangeur thermique maintenus plaqués en appui contre ladite batterie, pour réguler la température de celle-ci à l'intérieur d'une plage de températures de consigne.

La régulation thermique de la batterie, notamment dans le domaine des véhicules électriques et hybrides, est un point important. En effet, la température de la batterie doit rester comprise entre 20°C et 40°C afin d'assurer la fiabilité, l'autonomie, et la performance du véhicule, tout en optimisant la durée de vie de la batterie.

Dans les véhicules tout électriques et hybrides, la batterie comprend généralement plusieurs cellules de stockage d'énergie électrique reliées entre elles de façon à créer un générateur électrique de tension et de capacité désirée.

Ces cellules de stockage d'énergie électrique positionnées dans un boîtier de protection forment ce que l'on appelle un pack-batterie. Afin de réguler la température de la batterie, il est connu d'utiliser un dispositif de régulation thermique. Le dispositif de régulation thermique comprend un échangeur thermique positionné au contact de la batterie au fond du boîtier de protection et parcouru par un fluide caloporteur.

Le fluide caloporteur peut ainsi absorber la chaleur émise par chaque batterie afin de les refroidir ou selon les besoins, il peut lui apporter de la chaleur si la température de la batterie est insuffisante pour son bon fonctionnement.

Afin d'améliorer l'échange thermique entre la batterie et l'échangeur thermique, les dispositifs de régulation thermique de l'art antérieur proposent de positionner un ressort entre la multiplicité de tubes de l'échangeur thermique et le fond du boîtier de protection du pack-batterie. Le ressort pousse les tubes de l'échangeur thermique en direction du pack-batterie, ce qui garantit ainsi un meilleur contact entre les tubes de l'échangeur thermique et les cellules de stockage d'énergie électrique qui reposent dessus.

On pourra à ce propos se reporter au document FR3010834A1 (VALEO SYSTEMES THERMIQUES), qui décrit de tels dispositifs de montage des tubes d'un échangeur thermique en appui contre les cellules de stockage d'énergie électrique d'une batterie de véhicule automobile.

Selon ce document, il est proposé de fixer un ressort à un socle par des pions élastiquement déformables. Les pions sont répartis le long d'un axe du socle et sont emboîtés à l'intérieur d'ouvertures respectives ménagées au sommet du ressort. Ainsi, le ressort est maintenu par son sommet en position de fonctionnement sur le socle, en exerçant une poussée contre le socle.

Dans ce contexte, il est apparu à l'usage que les dispositions décrites relatives à l'agencement des supports de tube pouvaient être améliorées. En effet, les conditions de plaquage des tubes contre les cellules de la batterie sont déterminantes pour pouvoir obtenir une régulation fiable et rapidement efficace de la température de la batterie.

Or, la manière dont est fixé le ressort sur le socle génère un mauvais positionnement du socle vis-à-vis du tube de l'échangeur de chaleur. Lors du montage du pack de batteries, le ressort peut basculer ou se mettre de guingois d'un côté ou de l'autre et finalement s'arc-bouter entre une de ses extrémité libres et le pion central. Une telle mise en guingois peut entraîner un décalage transversal de l'ordre de 2,5 mm de la prise d'appui du ressort contre le socle. Une mise en guingois du ressort affecte la pertinence et la fiabilité de la poussée qu'il exerce contre le socle et soumet le ressort à des tensions internes inopportunes favorisant son usure à la fatigue, ce qui est à éviter. Une telle difficulté est à l'origine de perte de contact entre les batteries et le tube qui transporte le fluide caloporteur, ce qui dégrade le conditionnement thermique des batteries.

Il convient donc d'améliorer les modalités de montage du ressort sur le socle, permettant de fiabiliser et de parfaire la mise en position adéquate du ressort sur le socle sous conditions d'utilisation.

Le système illustré dans le document mentionné ci-dessus présente un deuxième inconvénient. En effet, le ressort présente une longueur comprise entre 200 et 500mm. Cette longueur implique qu'à chaque extrémité du ressort, la force d'appui du tube contre la batterie est diminuée. Ainsi, le jeu entre les tubes et les batteries est dégradée et l'homogénéité de température est corrélativement dégradée, au moins en extrémités des tubes. Il convient donc d'améliorer les modalités de prise d'appui du ressort contre le socle, permettant ainsi d'optimiser l'efficacité, la pertinence et la répartition des efforts de poussée des tubes vers les cellules de la batterie.

Dans ce cadre, le support de tube et plus spécifiquement le socle et le ressort sont en outre composés de structures simples et pouvant être facilement montés l'un sur l'autre. Il est en effet à prendre en considération les contraintes économiques notoirement sévères dans le domaine automobile. Ainsi, les recherches menées pour obtenir le plaquage souhaité des tubes contre les cellules de la batterie doivent notamment prendre en compte une limitation de la masse, de l'encombrement et des coûts d'obtention des supports de tubes. La facilité d'assemblage entre eux des composants des supports de tube, socle et ressort notamment, doit être également favorisée.

Dans le contexte des contraintes précédemment exposées, un premier aspect de la présente invention porte sur les modalités d'assemblage entre le ressort et le socle. Un deuxième aspect de la présente invention porte sur les modalités de prise d'appui du ressort contre le socle. Isolément ou en combinaison, le premier aspect et le deuxième aspect de la présente invention permettent d'améliorer la prise d'appui des tubes contre les cellules de la batterie.

WO2015071068 décrit un dispositif support d'un tube, notamment d'un tube d'un échangeur de chaleur destiné à venir contre une batterie de véhicule pour son refroidissement, le dispositif comprenant une base sur laquelle le tube est destiné à être monté, un élément de compression du tube contre la batterie et un ou des éléments de liaison de l'élément de compression sur la base, les éléments de liaison étant configurés pour venir en prise avec une face de l'élément de compression, opposée à ladite base, en étant en contact avec la base de part et d'autre dudit élément de compression. La présente invention a pour objet un support de tube selon la revendication 1.

Il est à noter que le support de tube est destiné à maintenir un tube plaqué contre une batterie de manière direct, c'est-à-dire avec un tube au contact direct de la batterie, ou de manière indirecte, dans la cas par exemple d'un échangeur de chaleur placé sous le pack-batterie.

Il est ainsi proposé d'isoler à la face inférieure du socle au moins deux zones d'appuis localisés transversalement distantes l'une de l'autre, contre lesquelles la face supérieure du ressort prend appui pour repousser le socle vers la batterie.

L'invention favorise l'efficacité de la poussée exercée par le ressort contre le socle pour repousser le ou les tubes dont il est porteur vers la cellule de la batterie qui lui ou leur est affectée. La prise d'appui du ressort contre le socle par les deux bourrelets optimise l'exploitation de la force de poussée contre le socle procurée par le ressort placé sous compression.

Selon un premier aspect, les bourrelets s'étendent longitudinalement le long du socle.

Selon un autre aspect, le socle comprend au moins une plaque de réception d'au moins un tube, les bourrelets étant ménagés transversalement à équidistance de part et d'autre d'un axe longitudinal transversalement médian de la plaque. Les bourrelets sont ménagés transversalement à équidistance de part et d'autre d'un sommet du ressort.

De manière intéressante, un creux est formé dans la face inférieure du socle entre les bourrelets, ledit creux délimitant une première réserve de passage d'un sommet du ressort. Pour garantir la prise d'appui du ressort uniquement contre les bourrelets, des réserves sont ménagées à la face inférieure de la plaque de part et d'autre des bourrelets, ce qui conforte l'absence de prise d'appui du ressort contre la plaque hors des bourrelets.

La face inférieure du socle peut délimiter au moins une deuxième réserve, ou une pluralité de deuxièmes réserves, dans laquelle au moins une jambe du ressort s'étend. Dans un tel cas, la deuxième réserve est formée par réduction de l'épaisseur du socle depuis les bourrelets vers des bords longitudinaux du socle. Ces deuxièmes réserves sont ménagées aux extrémités transversales de la face inférieure de la plaque, entre les bourrelets et les bords longitudinaux du socle. Par exemple, les extrémités transversales de la face inférieure de la plaque sont à cet effet inclinées ou incurvées depuis les bourrelets vers les bords latéraux de la plaque. En d'autres termes, l'épaisseur du socle diminue depuis les bourrelets vers ses bords longitudinaux situés à ses extrémités transversales.

Selon un exemple de réalisation, les bourrelets s'étendent le long de la totalité de la longueur de la plaque.

Selon l'invention, le moyen de montage comprend au moins un jeu d'au moins deux pattes s'étendant en saillie à partir d'une face inférieure du socle.

Selon l'invention, au moins une patte est sensiblement alignée longitudinalement avec au moins un bourrelet. Par ailleurs, ces pattes de soutien du ressort s'étendent à l'aplomb des bourrelets. La disposition des pattes à l'aplomb des bourrelets procure un guidage adéquat du ressort le long des pattes vers les bourrelets pour garantir l'exclusivité de la prise d'appui du ressort contre le socle par l'intermédiaire des bourrelets.

Les pattes sont par exemple flexibles et prennent appui contre le ressort, procurant un maintien transversal du ressort vis-à-vis du socle.

De manière avantageuse, le socle comporte au moins un pion de positionnement longitudinal du ressort vis-à-vis du socle.

La plaque peut comprend des échancrures ménageant des passages d'air verticaux à travers le socle.

On notera que les bourrelets sont issus de matière avec le socle.

En ce qui concerne le ressort, celui-ci peut comprendre deux premiers trous distincts au travers desquels une patte passe. Il peut également présenter une section transversale arquée. Le ressort peut encore comprendre au moins deux jambes au bout desquelles est formé un pied recourbé. La prise d'appui du ressort contre la paroi du boîtier est notamment effectuée par ces pieds ménagés aux extrémités de jambes du ressort, prolongeant de part et d'autre son sommet. Les pieds sont formés par ces recourbements des extrémités des jambes orientés l'un vers l'autre. Les efforts de poussée et l'équilibre de la prise d'appui du ressort contre l'un et l'autre des bourrelets sont ainsi optimisés.

L'invention couvre également un dispositif de régulation thermique d'un pack-batterie pour véhicule automobile comprenant au moins une batterie ou cellule de batterie contenue dans un boîtier, au moins un tube de circulation de fluide en contact avec la batterie et au moins un support de tube selon l'une quelconques des caractéristiques présentées ci-dessus, le support de tube étant agencé pour plaquer le tube contre la batterie.

Le support de tube décrit ci-dessus, destiné à maintenir un tube de circulation de fluide plaqué contre une batterie de véhicule pour réguler sa température, comprend le socle et le ressort qui s'étendent longitudinalement et assemblés l'un à l'autre par un moyen de montage, où le moyen de montage comprend au moins deux appuis entre le socle et le ressort configurés pour limiter une mobilité transversal du ressort par rapport au socle, le moyen de montage étant configuré pour générer un effort visant à redresser le ressort.

Il est donc également proposé d'immobiliser le ressort transversalement par rapport au socle dès leur assemblage entre eux, puis de maintenir cette immobilisation lors de la déformation du ressort. Une liberté de mouvement vertical intrinsèque du ressort par rapport au socle par suite de sa déformation est autorisée sous contrôle du maintien de son positionnement transversal sur le socle. Ainsi, une mise en guingois du ressort contre le socle est évitée depuis la position de montage jusqu'à la position de fonctionnement du support de tube. Les conditions de prise d'appui du ressort contre le socle permettent de garantir l'efficacité et le contrôle de la poussée exercée par le ressort contre le socle pour obtenir l'efficacité recherchée du plaquage adapté des tubes la batterie.

Selon un aspect du support de tube, le socle comprend une plaque délimitée par une face supérieure apte à former une base de réception d'au moins un tube.

Selon encore un autre aspect du support, le ressort est apte à générer un effort pour repousser le socle porteur dudit au moins un tube vers la batterie.

Selon l'invention, le moyen de montage comprend au moins un jeu d'au moins deux pattes s'étendant en saillie à partir d'une face inférieure du socle, les pattes d'un même jeu étant disposées à distance transversale l'une de l'autre et prenant contre le ressort des appuis transversalement antagonistes, de sorte à interdire la mobilité transversale du ressort par rapport au socle.

Avantageusement, le ressort comprend des fenêtres au travers desquelles passent les pattes, les appuis antagonistes étant générés par contact entre les pattes et la tranche des fenêtres.

Selon l'invention, au moins une des pattes est inclinées par rapport à une face supérieure du socle apte à former une base de réception d'au moins un tube. Selon un mode de réalisation, les deux pattes du jeu sont ainsi inclinées.

Optionnellement, la ou les pattes sont inclinées vers ou en direction d'un bord longitudinal du socle.

Selon un avantage de l'invention, au moins une des pattes est issue de matière avec le socle et flexible par rapport à celui-ci. Les deux pattes du jeu peuvent être formées ainsi. Les pattes sont avantageusement agencées flexibles en étant ancrées au socle à l'une de leurs extrémités et en étant munies des crochets à leur autre extrémité. Les pattes sont aussi de préférence inclinées par rapport au plan d'extension du socle. De telles dispositions permettent de parfaire le maintien et le guidage par les pattes du ressort vers le socle, et de contrôler les zones de prise d'appui du ressort contre le socle par suite de sa déformation. De telles zones de prise d'appui sont de préférence agencées en bourrelets ménagés dans les zones d'extension des pattes considérées à la face inférieure de la plaque.

De manière alternative, au moins une des pattes est une pièce rapportée sur le socle. Dans un tel cas, la pièce peut aussi porter la seconde patte du jeu. Cette pièce est alors enfilée par la face supérieure de réception du tube dans des fenêtres ménagées dans le socle de sorte que les pattes dépassent d'une face inférieure du socle.

Selon un mode réalisation, au moins deux pattes sont disposées transversalement à équidistance de part et d'autre d'un sommet du ressort.

Au moins une des pattes comporte à son extrémité libre un crochet de soutien du ressort.

Il est avantageusement mis à profit les pattes qui comportent des crochets à leurs extrémités libres. Les pattes sont notamment disposées de part et d'autre de l'axe transversalement médian du socle, à équidistance notamment. Les pattes traversent le ressort à travers des fenêtres qu'il comporte à cet effet, pour permettre aux crochets de soutenir le ressort à sa face inférieure en bordure desdites fenêtres en position de montage du support de tube.

Le ressort est soutenu par les crochets transversalement de part et d'autre de son sommet. Les crochets ménagent conjointement une assise de soutien du ressort à l'encontre de son échappée vis-à-vis du socle. Dans ce contexte, ladite assise est disposée à distance de ladite plaque pour soutenir le ressort à distance de la plaque en position de montage. Par suite de la déformation du ressort sous l'effet de sa mise en compression, le positionnement du ressort contre le socle en position de fonctionnement est rigoureusement obtenu. Ainsi, la poussée exercée par le ressort contre le socle est contrôlée et des tensions parasites internes du ressort sont évitées.

On notera que le socle peut comprendre au moins un pion de positionnement du ressort. Ce pion assure un positionnement longitudinal et transversal du ressort par rapport au socle.

Selon un exemple de réalisation, le pion traverse le ressort par une ouverture ménagée à son sommet.

De manière spécifique, le pion est placé sur une ligne droite passant par deux pattes d'un même jeu de patte.

Il est de préférence mis à profit la flexibilité des pattes pour ménager un guidage glissant du ressort le long du pion, tout en évitant une interférence entre le pion et les pattes vis-à-vis du guidage transversal et du soutien du ressort par le socle. Le pion est de préférence à surface de révolution exempte de tout obstacle à sa périphérie susceptible de gêner la libre mobilité verticale intrinsèque du ressort, tant en position de montage pour garantir son soutien par les crochets que vis-à-vis de sa mobilité intrinsèque sous l'effet de sa mise en compression en position de fonctionnement.

Dans un exemple du support de tube selon l'invention, le socle comporte au moins deux jeux de pattes longitudinalement distants, les pattes d'un même jeu étant alignées transversalement. Les jeux de pattes sont notamment ménagés aux extrémités longitudinales du socle. De telles dispositions permettent de ménager entre les jeux de pattes des échancrures le long des bords latéraux du socle. Les échancrures s'étendent notamment entre les parties d'extrémités longitudinales du socle hors desquelles émergent les pattes pour s'étendre sous la plaque.

Le design permet ainsi d'optimiser la masse du composant, tout en gardant un plaquage homogène de la compression du tube sur la batterie.

Un support de tube selon l'invention est constitutif d'un échangeur de chaleur apte à procurer la régulation de la température d'une batterie de véhicule automobile. Une telle batterie est notamment dédiée à l'alimentation en énergie d'une motorisation électrique procurant en tout ou partie la propulsion du véhicule automobile. Un tel support de tube est du type précédemment décrit comportant un socle et un ressort transversalement arqué assemblés entre eux par emboîtement. Le socle comporte notamment une plaque de préférence rehaussée par des entretoises, les entretoises formant conjointement une base de réception du tube.

Ainsi, le plaquage recherché des tubes contre la batterie est obtenu, isolément ou en combinaison :
- à partir d'un contrôle rigoureux des conditions de mise en appui du ressort contre le socle, tant en position de montage qu'en position de fonctionnement du support de tube. Pour rappel en position de montage, le socle et le ressort sont assemblés entre eux, le ressort étant exempt de mise en compression provoquant son tassement sur lui-même. En position de fonctionnement du support de tube, le ressort prend appui par déformation contre la face inférieure de la plaque du socle. Une telle prise d'appui du ressort contre le socle est provoquée sous l'effet de la mise en compression du ressort entre le socle et la paroi du boîtier lors de l'installation des supports porteurs des tubes contre la batterie, ou lors de l'installation des batteries dans le dispositif de régulation,
- à partir d'une exploitation optimisée des efforts de poussée exercés par le ressort contre le socle, procurant un plaquage le plus homogène possible des tubes contre les cellules de la batterie. Un tel plaquage est recherché de manière permanente sur la totalité de la surface de contact entre les tubes et la batterie.

Le socle est notamment formé d'un corps moulé en matière plastique. Un tel corps moulé permet de réaliser à moindre coût le socle, optionnellement les pattes, le pion et/ou les bourrelets étant avantageusement moulés simultanément avec socle.

Le ressort est notamment formé d'une lame métallique transversalement arquée, munie à ses extrémités transversales de pieds procurant la prise d'appui du ressort contre une paroi du boîtier du pack-batterie. Les pieds du ressort sont notamment formés par recourbement des bords longitudinaux de la lame situés transversalement de part et d'autre de son sommet. On notera que les pieds du ressort sont susceptibles de s'étendre suivant la totalité de sa longueur. Les pieds peuvent aussi être localement formés sur le ressort en étant répartis suivant sa longueur.

Un même tube peut être installé sur un ou plusieurs supports de tubes. Un même support de tube peut aussi comporter une base de réception d'un tube unique installé sur le support de tube suivant un axe longitudinal. Un même support de tube peut encore comporter une base de réception de deux tubes voisins juxtaposés transversalement sur le support de tube.

D'autres caractéristiques, détails et avantages de la présente invention ressortiront plus clairement à la lecture de la description donnée ci-après à titre indicatif, en relation avec les différents exemples de réalisation de l'invention illustrés sur les figures des planches annexées dans lesquelles :
- la figure 1 est une illustration partielle en perspective d'un dispositif de régulation thermique d'un pack-batterie de véhicule automobile équipée d'un échangeur de chaleur à tubes, les tubes étant montés sur des supports de tube conformes à la présente invention,
- la figure 2 est une vue en perspective d'un support de tube conforme à la présente invention, sur lequel est installé un tube participant d'un échangeur de chaleur et prévu pour être plaqué contre une batterie de véhicule automobile,

- la figure 3 est composée de trois schémas distincts (a), (b), (c) représentant chacun en section transversal un support de tube conforme à la présente invention et porteur d'un tube, les schémas (a), (b) et (c) illustrant successivement les modalités de mise en compression du ressort du support de tube,
- la figure 4 est une vue en perspective de dessous d'un socle participant d'un support de tube conforme à la présente invention,
- la figure 5 est un détail en coupe transversale du socle représenté sur la figure 3,
- la figure 6 est un schéma illustrant des caractéristiques géométriques particulières d'un socle participant d'un support de tube conforme à la présente invention et représenté en demie vue de section transversale,
- la figure 7 est un schéma illustrant des caractéristiques géométriques particulières d'un ressort participant d'un support de tube conforme à la présente invention et représenté en demie vue de section transversale.

Il faut tout d'abord noter que les figures exposent la présente invention de manière détaillée et selon des modalités particulières de sa mise en œuvre, et que lesdites figures peuvent bien entendu servir le cas échéant à mieux définir la présente invention, tant dans ses particularités que dans sa généralité.

Par ailleurs pour éviter de surcharger les figures et rendre aisée la lecture de la description qui va être faite de la présente invention, les organes communs représentés sur les différentes figures sont respectivement identifiés dans les descriptions propres à ces figures avec les mêmes numéros et/ou lettres de référence.

Il est aussi précisé que les diverses notions relatives utilisées pour décrire l'invention, notamment les notions géométriques et/ou de position, se réfèrent à un repère orthonormé à partir duquel sont identifiées la configuration générale des divers organes décrits et/ou leurs positions relatives les uns par rapport aux autres.

Il en est par exemple ainsi pour la direction longitudinale L correspondant à une direction d'extension générale d'un organe et permettant d'identifier les autres notions relatives transversal T et vertical V dans ledit repère orthonormé. Un même repère orthonormé est utilisé pour identifier l'ensemble des notions relatives abordées, à partir d'une extension qualifiée de longitudinale du support de tube selon l'invention.

Par exemple encore, une faible dimension en verticalité V relativement aux dimensions transversales T et/ou longitudinales L d'un organe identifie typiquement le caractère plan de cet organe. La notion de verticalité V identifie aussi les notions relatives inférieur et supérieur, ainsi que les notions dessus et dessous, sommet et pied par exemple.

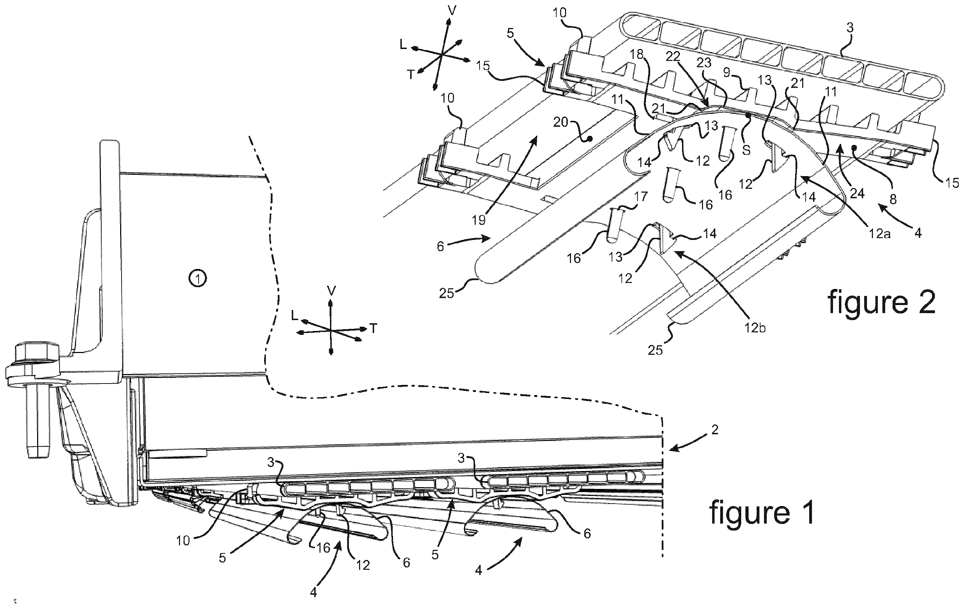

Sur la figure 1, une batterie 1 de véhicule automobile est équipée d'un échangeur de chaleur 2 à circulation de fluide caloporteur permettant de réguler sa température. Ils forment ainsi un dispositif de régulation thermique d'un pack-batterie pour véhicule automobile comprenant au moins une batterie 1 contenue dans un boîtier et au moins un tube 3 de circulation de fluide constitutif de l'échangeur de chaleur 2.

L'échangeur de chaleur 2 comporte une pluralité de tubes 3 globalement plans à travers lesquels circule le fluide. Les tubes 3 sont de préférence alvéolés par cloisonnement interne pour renforcer leur maintien en conformation. Il s'agit par exemple de tubes extrudés.

Les tubes 3 sont disposés transversalement côte à côte en étant installés sur des supports de tube 4. Les supports de tubes 4 sont agencés pour maintenir les tubes 3 plaqués contre une paroi de la batterie 1, en optimisant l'échange de chaleur procuré entre la batterie 1 et les tubes 3.

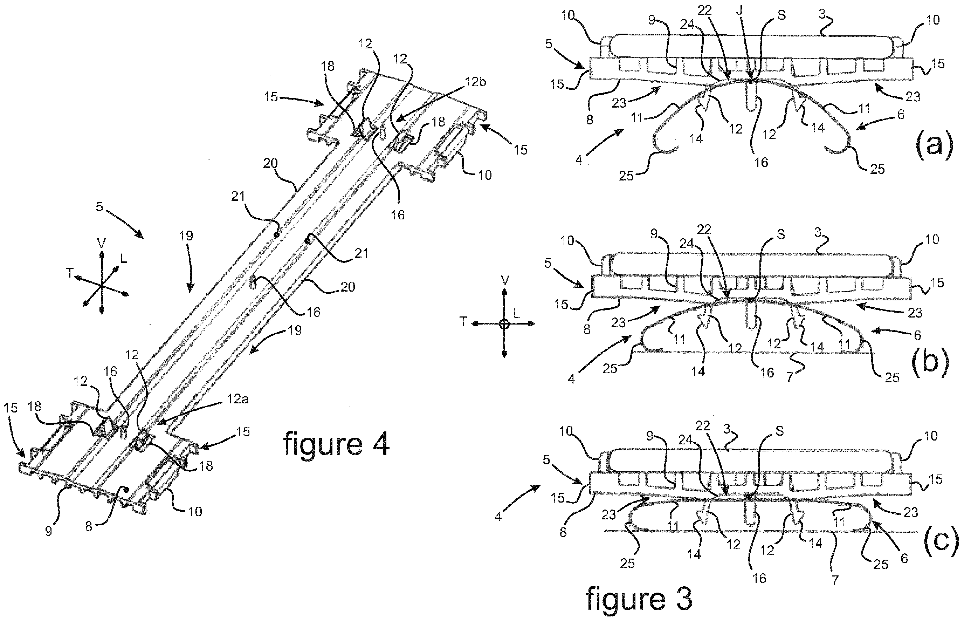

Les supports de tube 4 sont avantageusement identiques. On relèvera qu'un même support de tube 4 est susceptible de s'étendre longitudinalement le long de la totalité d'un tube 3 qu'il supporte. Sur la figure 1, il est préférentiellement choisi d'installer un même tube 3 sur une pluralité de supports de tube 4 longitudinalement distants. Les tubes 3 peuvent ainsi être individuellement installés sur un support de tube 4 qui leur est affecté, tel qu'illustré sur la figure 2 et la figure 3 par exemple.

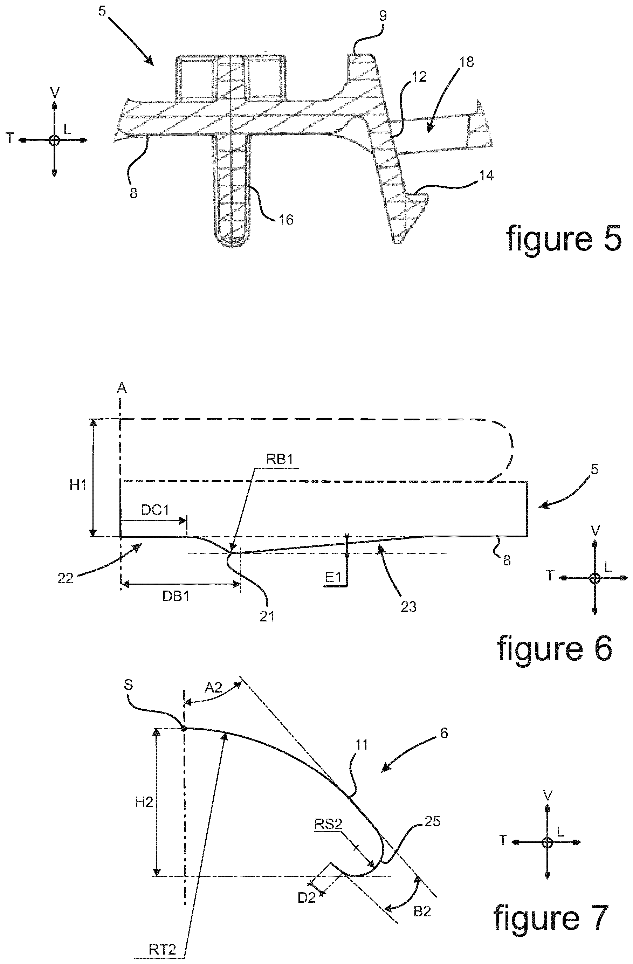

Sur la figure 1, figure 2 et figure 3, le support de tube 4 est globalement plan en s'étend longitudinalement de manière essentiellement uniforme selon son profil transversal. Le support de tube 4 comprend deux organes dont l'un est formé d'un socle 5 porteur d'au moins un tube 3 et dont l'autre est formé par un ressort 6 placé sous le socle 5. Le ressort 6 est monté sur le socle 5 par un moyen de montage, par exemple du type par emboîtement. Le ressort 6 est destiné à repousser le socle 5 vers la batterie 1, par sa mise en compression lorsqu'il est placé en appui contre une paroi 7 d'un boîtier logeant la batterie 1, tel qu'illustré sur les schémas (b) et (c) de la figure 3. Pour ce qui est de la description du socle 5, on pourra aussi se référer à la figure 4 et à la figure 5.

Il est si besoin précisé que sur la figure 1 et la figure 2, le ou les supports de tube 4 sont représentés en position de montage ou de repos, dans laquelle le ressort 6 est exempt de toute mise en compression. La position de fonctionnement est celle illustrée aux schémas b) et c) de la figure 3, dans lesquels le ressort 6 est mis en compression.

Le socle 5 comprend une plaque 8 rehaussée d'entretoises 9 transversalement distantes. Les entretoises 9 ménagent conjointement une base de réception du tube 3 suivant son plan général d'extension. Le tube 3 est porté à sa face inférieure par une face supérieure du socle 5, la face supérieure du tube 3 étant orientée vers l'extérieur pour son plaquage contre la batterie 1. Le socle 5 comporte des organes d'attache 10 pour maintenir le tube 3 sur la base délimitée par le socle 5, notamment formée par les entretoises 9. De tels organes d'attache 10 sont préférentiellement ménagés aux extrémités longitudinales du socle 5.

Le ressort 6 est formé d'une lame métallique qui s'étend longitudinalement le long du socle 5. L'épaisseur de la lame métallique est à titre indicatif comprise entre 0,1 mm et 0,4 mm. Le ressort 6 présente une section transversale arquée pour provoquer sa déformation par tassement vertical sur lui-même lorsqu'il est mis en interposition entre le socle 5 et la paroi 7 du boîtier. Un sommet S du ressort 6 est prolongé de part et d'autre par des jambes 11 de prise d'appui du ressort 6 contre la paroi 7 du boîtier. Les jambes 11 sont chacune munies à cet effet d'un pied 25 de prise d'appui contre la paroi 7 du boîtier. Les pieds 25 du ressort 6 sont formés par des recourbements des extrémités transversales des jambes 11, lesdits recourbements étant transversalement orientés l'un vers l'autre.

Le ressort 6 est monté sur le socle 5 de sorte que sa face supérieure puisse prendre appui contre la face inférieure de la plaque 8 sous l'effet de sa mise en compression verticale. Sur le schéma (a) de la figure 3, le support de tube 4 est illustré en position de montage du ressort 6 sur le socle 5. En fonctionnement, le support de tube 4 porteur du tube 3 est installé à l'intérieur du boîtier logeant la batterie 1. Le ressort 6 est alors placé en compression entre la paroi 7 du boîtier et le socle 5, tel qu'illustré sur les schémas (b) et (c).

Par suite de la mise en compression du ressort 6, sa face supérieure prend appui contre la face inférieure de la plaque 8, avec pour effet de repousser le socle 5 porteur du tube 3 vers la batterie 1. La poussée générée par le ressort 6 contre le socle 5 est ainsi exploitée pour maintenir le tube 3 plaqué contre la batterie 1.

Dans ce contexte, la qualité du plaquage du tube 3 contre la batterie 1 dépend de la pertinence du positionnement du ressort 6 en appui contre le socle 5. L'invention vise à garantir un positionnement correct du ressort 6 par rapport au socle 5 dès leur assemblage l'un à l'autre.

A cet effet, en position de montage ou de repos tel qu'illustré sur le schéma (a) de la figure 3, le ressort 6 est placé en soutien sur le socle 5 tout en étant immobilisé transversalement. En position de montage, la face supérieure du ressort 6 est maintenue à distance de la plaque 8, un léger jeu J vertical étant ménagé entre eux. En outre, le socle 5 comporte un moyen de montage du ressort 6 transversalement par rapport au socle 5. Un tel moyen de montage est par exemple agencé en pattes 12 solidaires du socle 5 ou rapportées sur celui-ci et soutenant le ressort 6 à sa face inférieure.

Plus particulièrement, le socle 5 comporte des jeux 12a, 12b de pattes 12 s'étendant en saillie sous la plaque 8. Les pattes 12 sont disposées sur le socle 5 à distance transversale l'une de l'autre, à équidistance du sommet S du ressort 6. Les pattes 12 traversent le ressort 6 en s'étendant à travers des fenêtres 12 respectives ménagées dans le ressort 6, à distance transversale l'une de l'autre.

Les pattes 12 prennent des appuis transversalement antagonistes contre le ressort 6, c'est-à-dire dans des sens opposés, par l'intermédiaire d'une tranche des fenêtres 13 à travers lesquelles s'étendent les pattes 12. Par ailleurs, les pattes 12 comportent chacune à leur extrémité libre des crochets 14 de soutien du ressort 6 à sa face inférieure en bordure des fenêtres 13. Les crochets 14 réalisent ainsi une assise de soutien par gravité du ressort 6 quand celui-ci est en position de montage.

Les pattes 12 sont par exemple issues du socle 5, en étant ancrées flexibles sur le socle 5. Ces pattes 12 sont symétriquement inclinées par rapport au plan d'extension de la plaque 8 vers les bords 15 du socle 5 qui s'étendent longitudinalement. La flexibilité des pattes 12 sur le socle 5 procure une élasticité des appuis transversaux qu'elles prennent respectivement contre le ressort 6. Les pattes 12 forment des rampes de guidage du ressort 6 placé sous compression vers la face inférieure de la plaque 8, en prenant des appuis élastiques transversaux contre la tranche des fenêtres 12.

De manière alternative, les pattes 12 peuvent faire partie d'une même pièce rapportée sur le socle 5. Cette pièce est alors enfilée par le dessus du socle et maintenue en appui contre celui-ci, par la mise en prise du ressort 6 sur les pattes 12.

Les pattes 12 prennent transversalement appui contre les bords des fenêtres 13 orientés vers le plus proche des bords 15 longitudinaux du socle 5. Les crochets 14 sont orientés vers le plus proche des bords 15 longitudinaux d'extrémité transversale du socle 5 et prennent appui en bordure des fenêtres 13.

Dans ce contexte, l'écart transversal entre les bords des fenêtres 13 contre lesquels les pattes 12 prennent appui correspond sensiblement à l'écart transversal entre les pattes 12 considérées à la face inférieure de la plaque 8. Les fenêtres 13 sont d'une dimension transversale supérieure aux dimensions transversales des pattes 12, pour autoriser le débattement en flexibilité transversale des pattes 12 malgré leur extension à travers le ressort 6. Le ressort 6 est maintenu transversalement par les pattes 12 pour procurer sa mise en appui adéquate contre le socle 5. Le maintien transversal du ressort 6 par les pattes 12 perdure depuis la position de montage vers la position de prise d'appui du ressort 6 contre le socle 5.

Par ailleurs, le socle 5 comporte des pions 16 de positionnement longitudinal du ressort 6 par rapport au socle 5. Les pions 16 sont alignés suivant l'axe longitudinal, de manière transversalement médiane du socle 5. Les pions 16 s'étendent perpendiculairement à la plaque 8 et traversent le ressort 6 à son sommet à travers des ouvertures 17 que comporte le ressort 6 à cet effet.

On relèvera que les pions 16 sont exempts à leur surface extérieure de tout obstacle susceptible de gêner le mouvement vertical du ressort 6 par rapport au socle 5 par suite de sa mise en compression. En outre, les pions 16 sont introduits par coulissement glissant à travers des ouvertures 17 ménagées au sommet S du ressort 6. De par la flexibilité des pattes 12, les pions 16 ne font pas obstacle au guidage transversal par les pattes 12 du ressort 6 placé sous compression.

Plus particulièrement visible sur la figure 5, les pattes 12 sont solidarisées au socle 5 au droit d'une entretoise 9. Les pattes 12 peuvent ainsi s'étendre dans le prolongement d'une entretoise 9 ménagée sur la surface supérieure du socle 5.

Les pattes 12 traversent la plaque 8 en s'étendant à travers des trous 18 que la plaque 8 comporte à cet effet. Les pions 16 s'étendent axialement sous la plaque 8 suivant une dimension supérieure à la distance de séparation entre la face supérieure de la plaque 8 et une assise de soutien du ressort 6 contre socle 5, en position de montage, définie conjointement par les crochets 14. L'angle d'inclinaison des pattes 12 est ici compris entre 100° et 105° par rapport au plan d'extension de la plaque 8.

Visible sur la figure 2 et sur la figure 4, le socle 5 comporte deux jeux 12a, 12b de deux pattes 12 respectivement disposés aux extrémités longitudinales du socle 5. Trois pions 16 sont disposés sur le socle 5, dont un pion 16 longitudinalement médian. Deux pions 16 sont respectivement ménagés aux extrémités longitudinales du socle 5 et entre les pattes 12 de l'un des jeux 12a, 12b. Ces deux pattes et ce pion sont alors alignés sur un segment de droite rectiligne.

Des découpes 19 sont ménagées entre les extrémités longitudinales du socle 5. De tels passages d'air 19 formés par des échancrures 20 s'étendant entre les extrémités longitudinales du socle 5 en étant ménagées le long de ses bords longitudinaux.

Sur la figure 3, les schémas (b) et (c) illustrent différentes positions de fonctionnement du support de tube 4, le ressort 6 étant placé en compression. Sur le schéma (c), la déformation du ressort 6 est optimale. Sur le schéma (b), la déformation du ressort 6 est intermédiaire entre sa mise sous compression optimale représentée sur le schéma (c) et la position de montage représentée sur le schéma (a), dans laquelle position de montage le ressort 6 est exempt de toute mise sous compression.

Par ailleurs, la qualité du plaquage du tube 3 contre la batterie 1 dépend de la puissance de la poussée développée par le ressort 6 par suite de sa mise en compression et de ses modalités de prise d'appui contre la face inférieure de plaque 8. Pour rappel, le ressort 6 selon l'art antérieur prend traditionnellement appui contre le socle 5 par son sommet. Il est proposé d'optimiser la prise d'appui du ressort 6 contre le socle 5 pour exploiter au mieux la puissance et la répartition de la poussée que le ressort 6 exerce contre le socle 5 en position de fonctionnement, pour finalement procurer un plaquage efficace et homogène des tubes 3 contre la batterie 1.

A cet effet, il est proposé de ménager à la face inférieure du socle 5, et plus précisément de la plaque 8 constitutive du socle 5, deux bourrelets 21 longitudinalement étendus. Les bourrelets 21 sont disposés à distance transversale l'un de l'autre de sorte à réaliser des surfaces d'appui du ressort 6 contre le socle 5. Une telle démarche est particulièrement avantageuse dans le cadre de supports de tube 4 munis desdites pattes 12 de soutien du ressort 6 vers la face inférieure de la plaque 8. En effet, les bourrelets 21 peuvent être ménagés à équidistance de part et d'autre du sommet S du ressort 6.

Les bourrelets 21 sont avantageusement ménagés à équidistance de l'axe longitudinalement médian de la plaque 8. Les bourrelets 21 sont placés par exemple à l'aplomb des pattes 12, de manière à être alignés avec celles-ci. La figure 4 montre les trous 18 ménagés dans la plaque 8 pour le passage des pattes 12 à son travers. Ces pattes 12 sont placées sur le trajet d'extension longitudinale des bourrelets 21.

Le ressort 6 placé sous compression est guidé le long des pattes 12 jusqu'à l'amenée de la face supérieure du ressort 6 conjointement en appui contre l'un et l'autre des bourrelets 21. L'exploitation de la poussée exercée par le ressort 6 contre le socle 5 est ainsi optimisée. On notera que la formation des pieds 12 de prise d'appui du ressort 6 contre la paroi 7 du boîtier, par recourbement de ses extrémités tel que précédemment décrit, permet d'optimiser la poussée exercée par le ressort 6 contre les bourrelets 11 en position de fonctionnement du support de tube 4.

Les bourrelets 11 sont formés en saillie à la face inférieure de la plaque 8, à partir de réserves 22, 23 ménagées dans la plaque 8. Une première réserve 22 prend la forme d'un creux 24 ménagé entre les bourrelets 21. Un tel creux 24 autorise le passage du sommet S du ressort 6, tant en position de montage qu'en position de fonctionnement comme cela est visible aux schémas (a) et (b) de la figure 3. Une deuxième réserve 23 est ménagée par diminution progressive de l'épaisseur du socle 5 entre les bourrelets 21 et les bords 15 longitudinaux du socle 5, considérés à ses extrémités transversales. La deuxième réserve 23 permet de garantir la prise d'appui du ressort 6 contre les bourrelets 21 à sa face supérieure, y compris en cas de déformation optimale du ressort 6 tel qu'illustré sur le schéma (c) de la figure 3.

L'assemblage procuré selon la présente invention entre le socle 5 et le ressort 6 permet d'interdire un débattement transversal entre eux lors de leur montage et/ou permet de contrôler la déformation du ressort 6 par suite de sa mise en compression. On notera aussi que le ressort 6 peut être démonté du socle 5 sans avoir à détériorer l'un et/ou l'autre d'entre eux.

En outre, les modalités de positionnement et/ou de prise d'appui du ressort 6 contre le socle 5 procurent un plaquage des tubes 3 contre la batterie 1, en prenant en compte leurs défauts de planéité et/ou leur déformation par suite d'une variation de leur température. Les modalités de prise d'appui du ressort 6 contre le socle 5 procurent une exploitation optimisée des efforts de poussée développés par le ressort 6.

Dans une plage tolérée de déformation du ressort 6, la poussée qu'il exerce contre le socle 5 procure un plaquage homogène des tubes 3 contre la batterie. Le plaquage des tubes 3 contre la batterie 1 est obtenu sur la totalité de leur surface de contact, sous l'effet de l'application d'une force variant à titre indicatif entre 150 N et 1200 N. Une telle échelle de variation de force sur l'étendue des surfaces en contact entre les tubes 3 et la batterie est à apprécier pour une hauteur globale d'un tube 3 porté par le support de tube 4 comprise entre 12 mm et 18 mm. Une telle hauteur globale prend notamment en compte une épaisseur du tube 3 de l'ordre de 4 mm.

Sur la figure 6 et la figure 7, il est donné des valeurs relatives aux caractéristiques géométriques du socle 5 et du ressort 6. De telles valeurs sont indiquées après des efforts de recherche relatifs au dimensionnement des composants du support de tube 4 et par suite des essais effectués permettant de valider de telles valeurs.

Plus particulièrement sur la figure 6, il est indiqué les valeurs suivantes concernant le socle 5 :
H1 (hauteur du socle augmentée de l'épaisseur du tube) est compris entre 12 mm et 18 mm.
RB1 (rayon de courbure du bourrelet 21) est d'une valeur comprise entre 1,1mm et 1,5mm.
DB1 (distance de séparation entre l'axe longitudinal transversalement médian A du socle 5 et le point géométrique de saillie optimal du bourrelet 21) est d'une valeur comprise entre 6,8mm et 7,2mm.
DC1 (distance de séparation entre l'axe transversalement médian du socle 5 et la base du bourrelet 21) est d'une valeur comprise entre 3mm et 5mm.
E1 (extension en saillie du bourrelet 21) est d'une valeur comprise entre 4mm et 5mm.

Plus particulièrement encore sur la figure 7, il est indiqué les valeurs suivantes concernant le ressort 6, considéré hors compression :
RS2 (rayon de courbure des pieds 25) est d'une valeur comprise entre 1,8mm et 3mm,
A2 (angle d'inclinaison générale des jambes 11 par rapport à l'axe vertical d'extension du ressort 6 passant par son sommet S) est d'une valeur comprise entre 40° et 50°,
B2 (angle d'inclinaison de l'extrémité du pied 25 par rapport à la direction d'extension de la jambe 11) est d'une valeur comprise entre 5°et 30°,
RT2 (Rayon de l'arc formé par le profil transversal du ressort 6 depuis son sommet S) est d'une valeur comprise entre 17 mm et 19 mm,
D2 (dimension d'extension de l'extrémité des pieds 25) est d'une valeur comprise entre 0,5 mm et 1,2 mm,
H2 (extension verticale du ressort 6 considérée entre les pieds 25 et le sommet S) est d'une valeur comprise entre 11 mm et 14 mm.

Les figures 6 et 7 montrent une demi-section respectivement du socle 5 et du ressort 6, mais on comprendra que l'autre demi-section non-visible sur ces figures est dimensionnée de manière identique aux valeurs listées ci-dessus.

## Revendications

1. Support de tube (4), destiné à maintenir un tube (3) de circulation de fluide plaqué contre une batterie (1) de véhicule pour réguler sa température, le support de tube (4) comprenant un socle (5) et un ressort (6) qui s'étendent longitudinalement et assemblés l'un à l'autre par un moyen de montage, le socle (5) comportant sur une face inférieure orientée vers le ressort (6) deux bourrelets (21) de prise d'appui du ressort (6) contre le socle (5) formant des zones d'appui isolées entres-elles, localisées transversalement distantes l'une de l'autre, contre lesquelles une face supérieure du ressort prend appui pour repousser le socle vers la batterie, le moyen de montage comprenant au moins un jeu d'au moins deux pattes (12a, 12b) s'étendant en saillie à partir d'une face inférieure (5) du socle, les pattes (12) d'un même jeu étant disposées à distance transversale l'une de l'autre et prenant contre le ressort des appuis transversalement antagonistes, au moins une patte (12) étant sensiblement alignée longitudinalement avec au moins un bourrelet (21), lesdites au moins deux pattes (12a, 12b) s'étendant à l'aplomb des bourrelets (21), et au moins une des pattes étant inclinées par rapport à la face supérieure du socle apte à former une base de réception du tubes (3).

2. Support de tube (4) selon la revendication 1, dans lequel les bourrelets (21) s'étendent longitudinalement le long du socle (5).

3. Support de tube (4), dans lequel le socle (5) comprend au moins une plaque (8) de réception d'au moins un tube (3), les bourrelets (21) étant ménagés transversalement à équidistance de part et d'autre d'un axe longitudinal transversalement médian de la plaque (8).

4. Support de tube (4) selon l'une quelconque des revendications précédentes, dans lequel un creux (24) est formé dans la face inférieure du socle (5) entre les bourrelets (21), ledit creux (24) délimitant une première réserve (22) de passage d'un sommet (S) du ressort (6).

5. Support de tube (4) selon l'une quelconque des revendications 1 à 4, dans lequel la face inférieure du socle (5) délimite au moins une deuxième réserve (23) dans laquelle au moins une jambe (11) du ressort s'étend.

6. Support de tube (4) selon la revendication 5, dans lequel la deuxième réserve est formée par réduction de l'épaisseur du socle (5) depuis les bourrelets (21) vers des bords (15) longitudinaux du socle (5).

7. Support de tube (4) selon l'une quelconque des revendications 1 à 6, **caractérisé en ce que** les bourrelets (21) s'étendent le long de la totalité de la longueur de la plaque (8).

8. Support de tube (4) selon l'une quelconque des revendications précédentes,
dans lequel les pattes (12) sont flexibles et prennent appui contre le ressort (6), procurant un maintien transversal du ressort (6) vis-à-vis du socle (5).

9. Support de tube (4) selon l'une quelconque des revendications précédentes, dans lequel le socle (5) comporte au moins un pion (16) de positionnement longitudinal du ressort (6) vis-à-vis du socle (5).

10. Support de tube (4) selon l'une quelconque des revendications précédentes, dans lequel la plaque (8) comprend des échancrures (20).

11. Support de tube (4) selon l'une quelconque des revendications 1 à 10,
dans lequel les bourrelets (21) sont issus de matière avec le socle (5).

12. Support de tube (4) selon l'une quelconque des revendications Z précédentes,
dans lequel le ressort (6) comprend deux premiers trous distincts au travers desquels une patte (12) passe.

13. Support de tube (4) selon l'une quelconques des revendications précédentes, dans lequel le ressort (6) présente une section transversale arquée.

14. Support de tube (4) selon l'une quelconques des revendications précédentes, dans lequel le ressort (6) comprend au moins deux jambes (11) au bout desquelles est formé un pied recourbé (25).

15. Dispositif de régulation thermique d'un pack-batterie pour véhicule automobile comprenant au moins une batterie (1) contenue dans un boîtier, au moins un tube (3) de circulation de fluide en contact avec la batterie et au moins un support de tube (4) selon l'une quelconques des revendications précédentes agencé pour plaquer le tube (3) contre la batterie (1).

## Patentansprüche

1. Rohrhalter (4), welcher dazu bestimmt ist, ein Rohr (3) zur Fluidzirkulation gegen eine Fahrzeugbatterie (1) gedrückt zu halten, um ihre Temperatur zu regeln, wobei der Rohrhalter (4) eine Basis (5) und eine Feder (6) umfasst, welche sich in Längsrichtung erstrecken und durch ein Montagemittel zusammengebaut sind, wobei die Basis (5) auf einer der Feder (6) zugewandten unteren Seite zwei Wülste (21) zur Abstützung der Feder (6) an der Basis (5) aufweist, welche voneinander isolierte Stützbereiche bilden, die in Querrichtung voneinander entfernt angeordnet sind und an denen sich eine Oberseite der Feder abstützt, um die Basis in Richtung der Batterie zu drücken, wobei das Montagemittel wenigstens einen Satz von wenigstens zwei Laschen (12a, 12b) umfasst, die sich von einer Unterseite (5) der Basis aus vorstehend erstrecken, wobei die Laschen (12) ein und desselben Satzes in einem Querabstand voneinander angeordnet sind und in Querrichtung einander entgegenwirkend an der Feder anliegen, wobei wenigstens eine Lasche (12) mit wenigstens einem Wulst (21) im Wesentlichen in Längsrichtung fluchtet, wobei sich die wenigstens zwei Laschen (12a, 12b) senkrecht unter den Wülsten (21) erstrecken und wenigstens eine der Laschen in Bezug auf die Oberseite der Basis geneigt ist, die geeignet ist, eine Aufnahmebasis des Rohre (3) zu bilden.

2. Rohrhalter (4) nach Anspruch 1, wobei sich die Wülste (21) in Längsrichtung entlang der Basis (5) erstrecken.

3. Rohrhalter (4), wobei die Basis (5) wenigstens eine Platte (8) zur Aufnahme wenigstens eines Rohres (3) umfasst, wobei die Wülste (21) in Querrichtung äquidistant beiderseits einer in Querrichtung mittleren Längsachse der Platte (8) ausgebildet sind.

4. Rohrhalter (4) nach einem der vorhergehenden Ansprüche, wobei eine Vertiefung (24) in der Unterseite der Basis (5) zwischen den Wülsten (21) ausgebildet ist, wobei die Vertiefung (24) einen ersten Raum (22) für den Durchgang einer Oberseite (S) der Feder (6) begrenzt.

5. Rohrhalter (4) nach einem der Ansprüche 1 bis 4, wobei die Unterseite der Basis (5) wenigstens einen zweiten Raum (23) begrenzt, in welchem sich wenigstens ein Schenkel (11) der Feder erstreckt.

6. Rohrhalter (4) nach Anspruch 5, wobei der zweite Raum durch Verringerung der Dicke der Basis (5) von den Wülsten (21) aus in Richtung von Längsrändern (15) der Basis (5) gebildet wird.

7. Rohrhalter (4) nach einem der Ansprüche 1 bis 6, **dadurch gekennzeichnet, dass** sich die Wülste (21) entlang der gesamten Länge der Platte (8) erstrecken.

8. Rohrhalter (4) nach einem der vorhergehenden Ansprüche, wobei die Laschen (12) flexibel sind und an der Feder (6) zur Anlage kommen, wobei sie ein Halten der Feder (6) in Querrichtung in Bezug auf die Basis (5) bewirken.

9. Rohrhalter (4) nach einem der vorhergehenden Ansprüche, wobei die Basis (5) wenigstens einen Stift (16) zur Längspositionierung der Feder (6) in Bezug auf die Basis (5) aufweist.

10. Rohrhalter (4) nach einem der vorhergehenden Ansprüche, wobei die Platte (8) Ausschnitte (20) umfasst.

11. Rohrhalter (4) nach einem der Ansprüche 1 bis 10, wobei die Wülste (21) stoffschlüssig mit der Basis (5) verbunden sind.

12. Rohrhalter (4) nach einem der vorhergehenden Ansprüche, wobei die Feder (6) zwei verschiedene erste Löcher umfasst, durch die hindurch eine Lasche (12) verläuft.

13. Rohrhalter (4) nach einem der vorhergehenden Ansprüche, wobei die Feder (6) einen bogenförmigen Querschnitt aufweist.

14. Rohrhalter (4) nach einem der vorhergehenden Ansprüche, wobei die Feder (6) wenigstens zwei Schenkel (11) umfasst, an deren Ende ein zurückgebogener Fuß (25) ausgebildet ist.

15. Vorrichtung zur Temperaturregelung eines Batteriepacks für ein Kraftfahrzeug, welche wenigstens eine Batterie (1), die in einem Gehäuse enthalten ist, wenigstens ein Rohr (3) zur Fluidzirkulation, das sich mit der Batterie in Kontakt befindet, und wenigstens einen Rohrhalter (4) nach einem der vorhergehenden Ansprüche, der dafür ausgelegt ist, das Rohr (3) gegen die Batterie (1) zu drücken, umfasst.

## Claims

1. Tube support (4), intended to hold a fluid circulation tube (3) pressed against a vehicle battery (1) so as to regulate the temperature of the latter, the tube support (4) comprising a mount (5) and a spring (6) that extend longitudinally and are joined to one another by a mounting means, the mount (5) having, on a lower face oriented towards the spring (6), two ridges (21) at which the spring (6) bears against the mount (5) and which form bearing regions that are isolated from one another and located transversely distant from one another, against which regions an upper face of the spring bears so as to push the mount back towards the battery, the mounting means comprising at least one set of at least two tabs (12a, 12b) that project from a lower face (5) of the mount, the tabs (12) of a given set being disposed at a transverse distance from one another and bearing against the spring at transversely opposing points, at least one tab (12) being substantially aligned longitudinally with at least one ridge (21), said at least two tabs (12a, 12b) extending vertically in line with the ridges (21), and at least one of the tabs being inclined with respect to the upper face of the mount that is able to form a base for receiving the tubes (3).

2. Tube support (4) according to Claim 1, wherein the ridges (21) extend longitudinally along the mount (5).

3. Tube support (4), wherein the mount (5) comprises at least one plate (8) for receiving at least one tube (3), the ridges (21) being formed transversely equidistantly on either side of a transversely median longitudinal axis of the plate (8).

4. Tube support (4) according to any one of the preceding claims, wherein an indentation (24) is formed in the lower face of the mount (5) between the ridges (21), said indentation (24) delimiting a first recess (22) for the passage of an apex (S) of the spring (6).

5. Tube support (4) according to any one of Claims 1 to 4, wherein the lower face of the mount (5) delimits at least one second recess (23) in which at least one leg (11) of the spring extends.

6. Tube support (4) according to Claim 5, wherein the second recess is formed by reducing the thickness of the mount (5) from the ridges (21) towards the longitudinal edges (15) of the mount (5).

7. Tube support (4) according to any one of Claims 1 to 6, **characterized in that** the ridges (21) extend along the entire length of the plate (8).

8. Tube support (4) according to any one of the preceding claims, wherein the tabs (12) are flexible and bear against the spring (6), resulting in the spring (6) being held transversely with respect to the mount (5).

9. Tube support (4) according to any one of the preceding claims, wherein the mount (5) has at least one peg (16) for the longitudinal positioning of the spring (6) with respect to the mount (5).

10. Tube support (4) according to any one of the preceding claims, wherein the plate (8) comprises cutouts (20) .

11. Tube support (4) according to any one of Claims 1 to 10, wherein the ridges (21) are integral with the mount (5) .

12. Tube support (4) according to any one of the preceding claims, wherein the spring (6) comprises two distinct first holes through which a tab (12) passes.

13. Tube support (4) according to any one of the preceding claims, wherein the spring (6) has an arcuate cross section.

14. Tube support (4) according to any one of the preceding claims, wherein the spring (6) comprises at least two legs (11) at the end of which a bent-over foot (25) is formed.

15. Device for thermal regulation of a battery pack for a motor vehicle comprising at least one battery (1) contained in a housing, at least one fluid circulation tube (3) in contact with the battery and at least one tube support (4) according to any one of the preceding claims, arranged so as to press the tube (3) against the battery (1).
